# EUROPEAN PATENT APPLICATION

(11) **EP 4 566 979 A1**
(43) Date of publication of application: **11.06.2025**
(21) Application number: 24216680.9
(22) Date of filing: 29.11.2024
(51) Int. Cl.: B66B 7/04

(54) **ELEVATOR SYSTEM AND GUIDING DEVICE THEREFOR**

(30) Priority: 05.12.2023 CN 202311661166
(71) Applicant: OTIS Elevator Company, Farmington, CT 06032 (US)
(72) Inventor: Li, Bichun, Shanghai, 200335 (CN); Zou, Kang, Shanghai, 200335 (CN); Cui, Hui, Shanghai, 200335 (CN); Li, Yang, Shanghai, 200335 (CN); Xu, Zhangming, Shanghai, 200335 (CN)
(74) Representative: Schmitt-Nilson Schraud Waibel Wohlfrom Patentanwälte Partnerschaft mbB

(57) **Abstract**

The present invention relates to an elevator system and a guiding device for use in an elevator system. The guide device for an elevator system comprises: a bracket; a plurality of rollers mounted onto the bracket; wherein, at least one of the plurality of rollers is mounted onto the bracket through a damping device, the damping device comprising: an oscillating rod, wherein a first end of the oscillating rod is rotatably mounted onto the bracket, a second end of the oscillating rod is provided with a first notch, and the roller is mounted onto the oscillating rod; a guide pin, wherein the guide pin is mounted onto the bracket and passes through the first notch of the oscillating rod; and one or more friction members, mounted onto the oscillating rod and in frictional contact with the guide pin during the oscillation of the oscillating rod. The guide device according to the embodiments of the present invention provides a damping device with a simple structure.

## Description

The present invention relates to the field of elevators, in particular to a guide device for maintaining the running stability of an elevator car during operation and an elevator system configured with the guide device.

The roller devices on the elevator car that engage with the elevator guide rail is one of the main components that affects the stability of elevator operation, which mainly guides the car to move along the elevator guide rail. In long-term use, the elevator guide rails arranged in the hoistway may be uneven, which may cause horizontal vibrations of the elevator car. There are some hydraulic damping devices to alleviate such vibrations.

The object of the present application is to solve or at least alleviate the problems existing in the prior art.

According to one aspect, a guide device for an elevator system is provided, comprising:
a bracket;
a plurality of rollers mounted onto the bracket;
wherein, at least one of the plurality of rollers is mounted onto the bracket through a damping device, the damping device comprising:
   an oscillating rod, wherein a first end of the oscillating rod is rotatably mounted onto the bracket, a second end of the oscillating rod is provided with a first notch, and the roller is mounted onto the oscillating rod;
   a guide pin, wherein the guide pin is mounted onto the bracket and passes through the first notch of the oscillating rod; and
   one or more friction members, mounted onto the oscillating rod and in frictional contact with the guide pin during the oscillation of the oscillating rod.

Particular embodiments further may include at least one, or a plurality of, the following optional features, alone or in combination with each other:
Optionally, in an embodiment of a guide device, the guide pin comprises opposite planes parallel to each other, and the one or more friction members comprise two friction members that are in frictional contact with the opposite planes, respectively.

Optionally, in an embodiment of the guide device, the oscillating rod has a first through-hole intersecting with the first notch, and the two friction members are mounted from opposite sides to the first through-hole.

Optionally, in an embodiment of the guide device, each of the friction members comprises:
a friction member body with external threads, wherein the external threads of the friction member body engage with the internal threads of the first through-hole, and the friction member body further comprises a torque receiving end;
a friction end; and
a spring member between the friction member body and the friction end.

Optionally, in an embodiment of the guide device, the outer surface of the friction end is spherical or planar.

Optionally, in an embodiment of the guide device, a friction material coating is coated on the contact area of the opposite planes of the guide pin in frictional contact with the friction member.

Optionally, in an embodiment of the guide device, a groove is provided on the opposite planes of the guide pin, and the contact area where the friction member is in contact with the guide pin is located within the groove during the oscillation of the oscillating rod.

Optionally, in an embodiment of the guide device, the groove is constructed as an arc that matches the trajectory of the friction member moving with the oscillating rod.

Optionally, in an embodiment of the guide device, the arc-shaped groove has a varying depth, wherein, the depth in the middle of the arc-shaped groove is greater than the depth at both ends of the arc-shaped groove, and the depth of the arc-shaped groove gradually decreases from the middle to both ends.

Optionally, in an embodiment of the guide device, the bracket comprises a base and one or more columns extending from the base, the first end of the oscillating rod is rotatably mounted onto the base, and the guide pin is connected to the column in a manner substantially parallel to the base.

Optionally, in an embodiment of the guide device, the guide pin comprises a first end and a second end opposite to each other, and a guide pin body between the first end and the second end, where the first end of the guide pin is fixed to the column, and a spring is provided between the second end of the guide pin and the oscillating rod.

Optionally, in an embodiment of a guide device, the cross section of the first notch is rectangular, the first end and the second end of the guide pin have external threads, and the cross section of the guide pin body is rectangular.

Optionally, in an embodiment of a guide device, the guide device further comprises a limit pin connected to the column in parallel with the guide pin, where the limit pin passes through a second through-hole on the oscillating rod, and the limit pin comprises a stopper that limits the maximum extent of the oscillating rod oscillating away from the guide rail.

Optionally, in an embodiment of a guide device, the plurality of rollers comprise a first roller and a second roller arranged side by side, and a third roller with a rotation plane perpendicular to the first roller and the second roller, where all of the first roller, the second roller, and the third roller are mounted on to the bracket through the damping device.

An elevator system is also provided, comprising:
an elevator car; and
the guide device according to various embodiments, connected to the elevator car for guiding the elevator car to move along the elevator guide rail.

Particular embodiments further may include at least one, or a plurality of, the above mentioned optional features, alone or in combination with each other.

The guide device according to the embodiments of the present invention provides a damping device with a simple structure.

With reference to the accompanying drawings, the disclosure of the present application will become easier to understand. Those skilled in the art would easily understand that these drawings are for the purpose of illustration, and are not intended to limit the protection scope of the present application. In addition, in the figures, similar numerals are used to denote similar components, where:
FIG. 1 is a schematic view of an exemplary elevator system;
FIG. 2 is a perspective view of an exemplary mounting frame for a guide device of an elevator car;
FIGS. 3 and 4 show views of a guide device according to an embodiment of the present invention from different perspectives;
FIGS. 5 and 6 show schematic views of an oscillating rod according to an embodiment of the present invention from different perspectives;
FIG. 7 shows a perspective view of a guide pin according to an embodiment of the present invention;
FIGS. 8 and 9 show views of a guide pin from different perspectives according to another embodiment of the present invention;
FIG. 10 shows a cross-sectional view of the guide pin in FIGS. 8 and 9;
FIG. 11 shows a schematic view of a friction member in contact with a guide pin according to an embodiment of the present invention; and
FIGS. 12 and 13 show enlarged views of a friction member in contact with a guide pin from different perspectives.

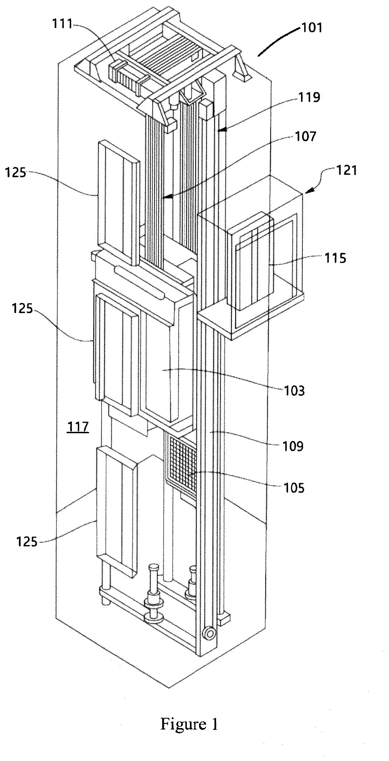

FIG. 1 is a perspective view of an elevator system 101. The elevator system 101 comprises an elevator car 103, a counterweight 105, a rope 107, a guide rail 109, a traction machine 111, and an elevator system controller 115. The elevator car 103 and counterweight 105 are connected to each other through the rope 107. The rope 107 may include or be configured as, for example, a rope, steel cable, and/or coated steel strip. In this embodiment, the rope is configured as a rope strip integrated with multiple ropes. The counterweight 105 is configured to balance the load of the elevator car 103, and is configured to facilitate synchronous reverse movement of the elevator car 103 within the elevator hoistway 117 along the guide rail 109 relative to the counterweight 105. The rope 107 is connected to the traction machine 111, which is a part of the top structure of the elevator system 101. The traction machine 111 is configured to control movement between the elevator car 103 and the counterweight 105.

The elevator system controller 115 is, as shown, located in an elevator system controller room 121 of the elevator hoistway 117, and is configured to control the operation of the elevator system 101, especially the elevator car 103. For example, the elevator system controller 115 can provide drive signals to the traction machine 111 to control the acceleration, deceleration, leveling, parking, etc. of the elevator car 103. When moving up or down along the guide rail 109 in the elevator hoistway 117, the elevator car 103, when, for example, controlled by the elevator system controller 115, can stop at one or more landings 125. Although, as shown, the elevator system controller 115 is located in the elevator system controller room 121, those skilled in the art understand that elevator system controller 115 can be located and/or configured at other positions or locations within the elevator system 101. The traction machine 111 may include a motor or similar drive mechanism.

Although the elevator system is illustrated and described herein using a rope system as an example, the elevator system using other methods and mechanisms for moving the elevator car within the elevator hoistway can also employ the implementation scheme of the present disclosure. FIG. 1 is merely a non-restrictive example for illustrative and explanatory purposes.

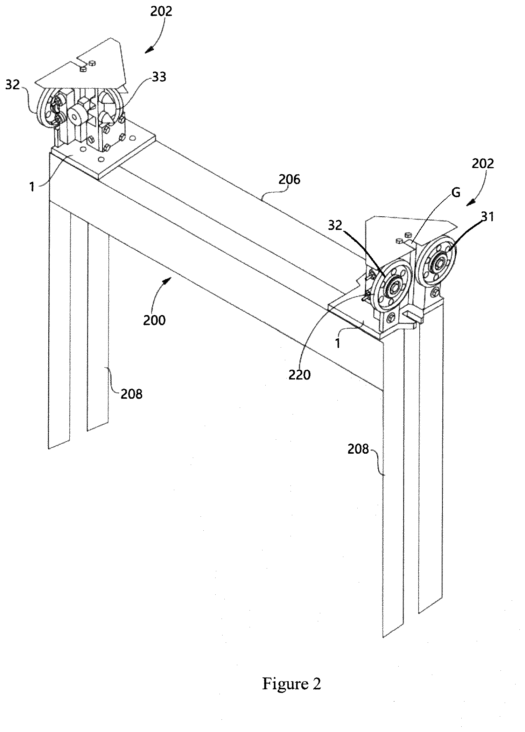

Turning now to FIG. 2, FIG. 2 is a local perspective view of an elevator car frame 200 on which two guide devices 202 for an elevator car are mounted. The elevator car frame 200 comprises a horizontal frame 206 extending between a pair of vertical frames 208, which are mounted on the top of the elevator car. As known in the art, the guide device 202 for an elevator car is mounted onto at least one of the horizontal frame 206 and the vertical frames 208 through a bracket 1. A plurality of rollers 31, 32, and 33 are mounted onto the bracket 1, and fixed to the elevator car along with the bracket 1. Although only one pair of guide devices 202 at the top of the elevator car is shown in FIG. 2, optionally, the one pair of guide devices 202 can also be disposed at the bottom or in the middle of the elevator car, or two or more pairs of guide devices 202 can be disposed at the top, in the middle, and/or at the bottom of the elevator car, respectively.

The guide devices 202 for an elevator car are each configured to engage with the guide rail 109 and move along the guide rail 109. The guide rail is generally located at the position of the gap G of the guide devices 202 on both sides, and is in contact with the respective rollers 31, 32 and 33, so that when the elevator car moves, the respective rollers 31, 32, 33 roll on the respective surfaces of the guide rail 109. For example, as shown in FIG. 2, a first roller 31 and a second roller 32 roll on the opposite sides of the guide rail 109, while a third roller 33 rolls on the edge of the guide rail 109. In the current configuration, the third roller 33 can also be referred to as the lateral roller, and the first roller 31 and the second roller 32 can be referred to as the front and rear rollers. Although a specific configuration is shown in FIG. 2, those skilled in the art understand that the implementation scheme provided herein is applicable to various other guide device configurations used for elevator cars.

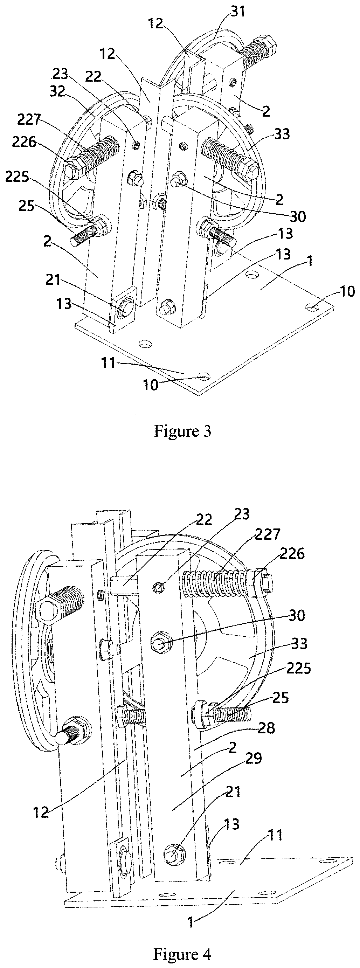

With continued reference to FIGS. 3 and 4, perspective views of a guide device at different perspectives are shown. As mentioned above, the guide device comprises: a bracket 1 and a plurality of rollers 31, 32 and 33 mounted onto the bracket 1. In order to keep some or all of the plurality of rollers 31, 32, and 33 in contact with the guide rail 109 during the movement of the elevator car, and to reduce vibrations during rolling, at least one of the plurality of rollers 31, 32, and 33 is mounted onto the bracket 1 through a damping device. It should be appreciated that although in the illustrated embodiment, the guide device comprises three rollers 31, 32 and 33, and all the three rollers 31, 32 and 33 are mounted onto the bracket 1 through a damping device according to the embodiment of the present invention. In alternative embodiments, however, the guide device may include rollers of other numbers. In addition, one, part or all of the rollers can be mounted onto the bracket through a damping device according to the embodiment, while the other rollers can be directly mounted onto the bracket 1 or mounted onto bracket 1 through other types of damping devices or by any other suitable means.

The damping device according to the embodiment comprises: an oscillating rod 2, where the first end of the oscillating rod 2 is rotatably mounted onto the bracket 1, the second end of the oscillating rod 2 is provided with a first notch 282, and the roller is mounted onto the oscillating rod 2; a guide pin 22, wherein the guide pin 22 passes through the first notch 282 of the oscillating rod 2, and the dimension of the first notch 282 of the oscillating rod 2 and the dimension of the guide pin 22 are configured to allow the oscillating rod 2 to oscillate within a certain range, where the oscillating directions thereof are toward and away from the guide rail 19, and the oscillating range thereof is limited by the guide rail 19 on the one hand, and limited by the limit pin as described below on the other hand; and one or more friction members 23, which are mounted on the oscillating rod 2 and in frictional contact with the guide pin 22 during the oscillation of the oscillating rod, providing damping effect through the friction force between the friction members 23 and the guide pin 22.

In some embodiments, the bracket 1 comprises a base 11, on which a plurality of mounting holes 10 can be provided for fixing the base 11 to the horizontal frame 206 and/or the vertical frames 208. A mounting plate 13 can also be provided on the base 11. The first end (the lower end in the figure) of the oscillating rod 2 is rotatably fixed to the mounting plate 13. It is used as the oscillating axis of the oscillating rod 2 by for example, a bolt 21 passing through the mounting plate 13 and the opening 291 at the first end of the oscillating rod 2. The bracket 1 also comprises one or more columns 12 extending from the base 11, where the one or more columns 12 can be used to mount the guide pin 22, limit pin, and other components. In the illustrated embodiment, the cross section of the column 12 is L-shaped, and two columns 12 are provided. One of the two columns 12 is used to mount a damping device for the first roller 31, while the other column 12 is shared by the damping devices for the second roller 32 and the third roller 33, and the damping devices of the second roller 32 and the third roller 33 are mounted onto two adjacent walls of the other column 12.

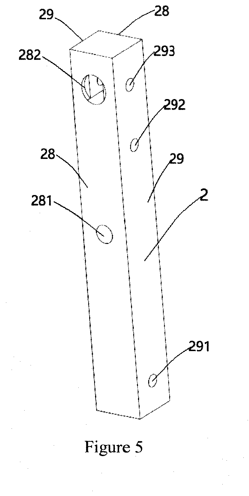

With continued reference to FIGS. 5 to 7, in some embodiments, the oscillating rod 2 may be formed as a rectangular column, comprising a first opposite planes 28 and a second opposite planes 29. The first notch 282 for arranging the guide pin 22 and the second notch 281 for arranging the limit pin 25 are provided across the first opposite planes 28. An opening 291 for rotatably connecting with the base 11 of the bracket 1, a first through-hole 293 for mounting the friction member, and a second through-hole 292 for mounting the roller may be provided across the second opposite planes 29. The second through-hole 292 is located between the first through-hole 293 and the opening 291.

In some embodiments, the guide pin 22 comprises a first end 221, a second end 222, and a guide pin body 223 between the first end 221 and the second end 222, where the friction member is in frictional contact with the guide pin body 223. In some embodiments, the guide pin body 223 may comprise opposite surfaces 2231 and 2233 parallel to each other, and the one or more friction members may comprise two friction members 23 that are in frictional contact with the opposite surfaces 2231 and 2233, respectively. The first end 221 of the guide pin 22 is used for mounting to the column 12, wherein the first end 221 of the guide pin 22 can be configured with external threads for mounting to the column 12. When mounting the guide pin 22 onto the column 12, the guide pin 22 is generally parallel to the base 11. The second end 222 of the guide pin 22 can also be provided with external threads. In some embodiments, the second end 222 of the guide pin 22 is generally oblong, comprising opposite planar walls 2221 and opposite arc-shaped walls 2222, with threads formed on the opposite arc-shaped walls 2222. The opposite planar walls 2221 is flush with the opposite surfaces of the guide pin body 223 to form continuous planes. In some embodiments, a nut 226 can be mounted on the second end 222 of the guide pin 22, and a spring 227 is arranged between the nut 226 and the oscillating rod 2, thereby pushing the oscillating rod 2 and the roller installed on it towards the guide rail 19. The spring 227 can also absorb the roller vibrations caused by the unevenness of the guide rail 19. The position of the nut 226 mounted at the second end 222 of the guide pin 22 can be adjusted, so as to adjust the pressure exerted by the spring 227 on the oscillating rod 2, thereby adjusting the damping parameters.

In some embodiments, the first notch 282 can be a through-hole or an open notch (such as a U-shaped notch). At this point, the second end of the oscillating rod 2 forms as fork-shaped. In some embodiments, the guide pin 22 comprises a pair of opposite surfaces 2231 and 2233 parallel to each other, and the one or more friction members 23 comprise two friction members that are in frictional contact with the opposite surfaces, respectively. As shown in FIG. 5, the cross section of the first notch 282 of the oscillating rod 2 can be rectangular, and the cross section of the guide pin body 223 can also be rectangular and fit with the first notch 282. The guide pin body 223 may include opposite surfaces 2231 and 2233 parallel to each other, and top side 2232 and bottom side opposite to each other. In some embodiments, one or more friction members 233 comprise two friction members provided on opposite sides of the guide pin body 223. Alternatively, only one friction member 23 may be provided. In alternative embodiments, the friction members may be in frictional contact with the top side 2232 of the guide pin body 223. In some embodiments, the guide pin 22 may have an area 224 in frictional contact with the friction member. In some embodiments, the contact area 224 may be provided with a friction material coating, and in some embodiments, the contact area 224 may be formed as a groove. In alternative embodiments, the contact area 224 may also be flush with the nearby surface.

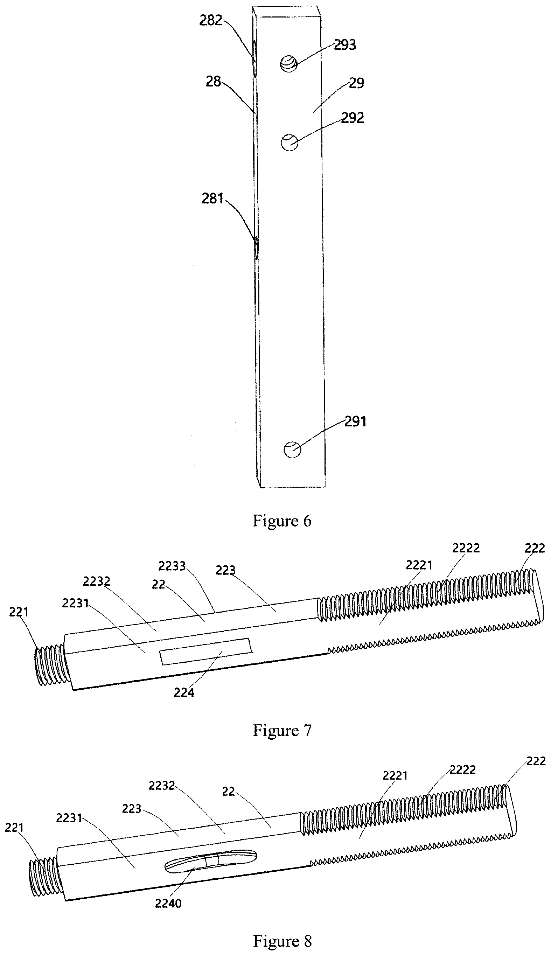

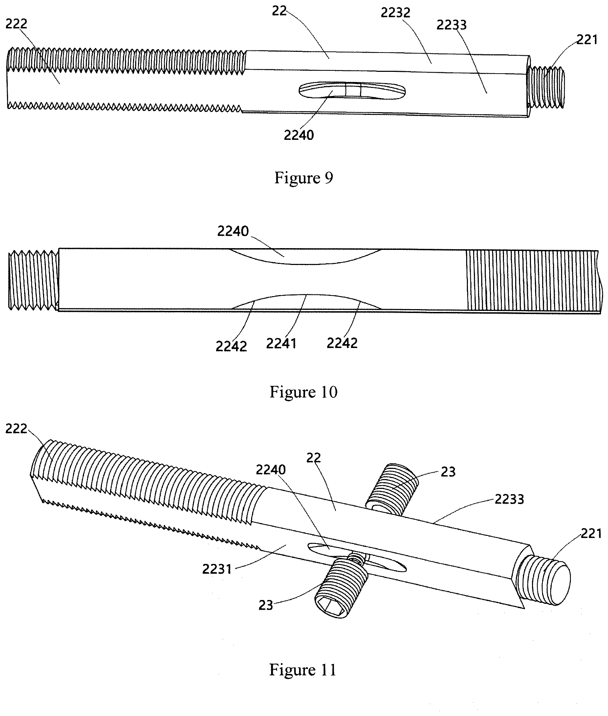

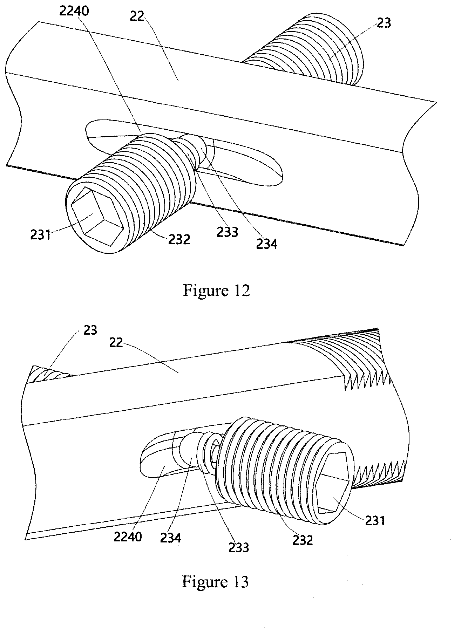

With continued reference to FIGS. 8 to 13, in some embodiments, the area where the guide pin 22 is in frictional contact with the friction member 23 is within the groove 2240. In some embodiments, the groove 2240 is constructed as an arc that matches the trajectory of the friction member 23 as it moves with the oscillating rod 2. In some embodiments, the arc-shaped groove 2240 may have a varying depth. As clearly shown in FIG 10, in the circumferential direction, the depth of the middle part 2241 of the arc-shaped groove 2240 is greater than the depth of the two ends 2242 of the arc-shaped groove 2240, and the depth of the arc-shaped groove 2240 gradually decreases from the middle part 2241 to the two ends 2242. In addition, in the radial direction, the arc-shaped groove 2240 can also be configured to be deeper in the middle and shallower on both sides to better fit with the friction end 234, which is spherical at the outer end.

As shown in FIGS. 5 and 6, the oscillating rod has a first through-hole 293 that intersects with the first notch 282, and one or more friction members 23 comprise two friction members 23 mounted from both sides into the first through-hole 293. As shown in FIGS. 11 to 13, two friction members 23 are arranged to contact the opposite surfaces 2231 and 2233 of the guide pin 22. In some embodiments, each friction member 23 comprises: a friction member body 232 with external threads, wherein the external threads of the friction member body 232 engage with the internal threads of the first through-hole 293, and the friction member body 232 further comprises a torque receiving end 231 (such as a hexagonal notch as shown, or alternatively, a cross notch, etc.); a friction end 234; and a spring member 233, such as a spring, between the friction member body 232 and the friction end 234. In some embodiments, the outer end face of the friction end 234 is spherical or planar. In the case where the groove 2240 has a variable depth, the friction end 234 with a spherical outer end face can better fit with the groove 2240. In the case where the groove 2240 has a consistent depth, the friction end 234 with a planar outer end face may be more suitable. The threaded connection between the friction member 23 and the oscillating rod allows for adjustable positive pressure and friction force between the friction member 23 and the guide pin 22, which further adjusts the damping parameters. Additionally, this also facilitates the maintenance or replacement of the friction member 23. For example, the friction member 23 can be tightened when the friction force is insufficient.

In some embodiments, the guide device further comprises a limit pin 25, which is connected to the column 12 in parallel with the guide pin 22. The limit pin 25 passes through the second through-hole 281 on the oscillating rod 2, and the limit pin 25 includes a stopper 225. For example, the limit pin 25 may also be provided with external threads, and the stopper 225 is a nut connected to it. The configuration of the stopper 225 can limit the maximum oscillation of the oscillating rod 2 in the direction away from the guide rail. In some embodiments, the roller mounting position is between the second through-hole 281 and the first through-hole 293.

In some embodiments, a plurality of rollers include: a first roller 31 and a second roller 32 arranged side by side, and a third roller 33. The rotation plane of the third roller 33 is perpendicular to the rotation planes of the first roller 31 and the second roller 32. The first roller 31, second roller 32, and third roller 33 are all mounted on the base 11 of the bracket 1 through a damping device.

The guide device according to the embodiments of the present invention can, by adjusting the positions of the friction members, easily adjust the damping parameters. In addition, the pressure on the oscillating rod can also be easily adjusted by adjusting the positions of the nuts to further adjust the damping parameters. In addition, compared to the hydraulic damping system, the guide device according to the embodiments of the present invention has a lower cost.

The specific embodiments described above in the present application are merely intended to describe the principles of the present application more clearly, wherein various components are clearly shown or described to facilitate the understanding of the principles of the present invention. Those skilled in the art may, without departing from the scope of the present application, make various modifications or changes to the present application. Therefore, it should be understood that these modifications or changes should be included within the scope of patent protection of the present application.

## Claims

1. A guide device for an elevator system, comprising:
a bracket;
a plurality of rollers mounted onto the bracket;
wherein, at least one of the plurality of rollers is mounted onto the bracket through a damping device, the damping device comprising:
an oscillating rod, wherein a first end of the oscillating rod is rotatably mounted onto the bracket, a second end of the oscillating rod is provided with a first notch, and the roller is mounted onto the oscillating rod;
a guide pin, wherein the guide pin is mounted onto the bracket and passes through the first notch of the oscillating rod; and
one or more friction members, mounted onto the oscillating rod and in frictional contact with the guide pin during oscillation of the oscillating rod.

2. The guide device according to claim 1, wherein the guide pin comprises opposite surfaces parallel to each other, and the one or more friction members comprise two friction members that are in frictional contact with the opposite surfaces, respectively.

3. The guide device according to claim 2, wherein the oscillating rod has a first through-hole intersecting with the first notch, and the two friction members are mounted from opposite sides into the first through-hole.

4. The guide device according to claim 3, wherein each of the friction members comprises:
a friction member body with external threads, wherein the external threads of the friction member body engage with internal threads of the first through-hole, and the friction member body further comprises a torque receiving end;
a friction end; and
a spring member between the friction member body and the friction end.

5. The guide device according to claim 4, wherein an outer surface of the friction end is spherical or planar.

6. The guide device according to any of claims 2 to 5, wherein a friction material coating is coated on a contact area on the opposite surfaces of the guide pin in frictional contact with the friction member.

7. The guide device according to any of claims 1 to 6, wherein a groove is provided on the opposite surfaces of the guide pin, and the contact area where the friction member is in contact with the guide pin is located within the groove during the oscillation of the oscillating rod.

8. The guide device according to claim 7, wherein the groove is constructed as an arc that matches a trajectory of the friction member moving with the oscillating rod.

9. The guide device according to claim 8, wherein the groove in the shape of an arc has a varying depth, where in a circumferential direction, a depth in the middle of the groove in the shape of an arc is greater than a depth at both ends of the groove in the shape of an arc, and the depth of the groove in the shape of an arc gradually decreases from the middle to both ends.

10. The guide device according to any of claims 1 to 9, wherein the bracket comprises a base and one or more columns extending from the base, the first end of the oscillating rod is rotatably mounted onto the base, and the guide pin is connected to the column in a manner substantially parallel to the base.

11. The guide device according to claim 10, wherein the guide pin comprises a first end and a second end opposite to each other, and a guide pin body between the first end and the second end, where the first end of the guide pin is fixed to the column, and a spring is provided between the second end of the guide pin and the oscillating rod.

12. The guide device according to claim 11, wherein a cross section of the first notch is rectangular, a cross section of the guide pin body is rectangular, and the first end and the second end of the guide pin have external threads.

13. The guide device according to any of claims 10 to 12, wherein the guide device further comprises a limit pin connected to the column in parallel with the guide pin, where the limit pin passes through a second through-hole on the oscillating rod, and the limit pin comprises a stopper that limits a maximum extent of the oscillating rod oscillating away from the guide rail.

14. The guide device according to any of claims 1 to 13, wherein the plurality of rollers comprise a first roller and a second roller arranged side by side, and a third roller with a rotation plane perpendicular to those of the first roller and the second roller, where all of the first roller, the second roller, and the third roller are mounted onto the bracket through the damping device.

15. An elevator system, comprising:
an elevator car; and
the guide device according to any of claims 1 to 14, connected to the elevator car for guiding the elevator car to move along the elevator guide rail.
